# EUROPEAN PATENT APPLICATION

(11) **EP 2 991 023 A1**
(43) Date of publication of application: **02.03.2016**
(21) Application number: 15748984.0
(22) Date of filing: 09.02.2015
(51) Int. Cl.: G06Q 30/02

(54) **ELECTRONIC SHOPPING METHOD AND DEVICE**

(30) Priority: 12.02.2014 CN 201410048372
(71) Applicant: Huawei Technologies Co., Ltd., Longgang Shenzhen, Guangdong 518129 (CN)
(72) Inventor: HAN, Zhixun, Shenzhen Guangdong 518129 (CN)
(74) Representative: Goddar, Heinz J.
(86) International application number: PCT/CN2015/072581
(87) International publication number: WO 2015/120788

(57) **Abstract**

Embodiments of the present invention provide an electronic-shopping method and apparatus. The electronic-shopping method includes: obtaining information about at least two alternative commodities selected by a first user; sending, through a network, the information about the at least two alternative commodities to user equipment used by a second user, so that the second user performs selection from the at least two alternative commodities, where the second user is different from the first user and is designated by the first user; obtaining selection information of the second user on the at least two alternative commodities; and determining a to-be-purchased commodity from the at least two alternative commodities according to the selection information. According to the method provided in the embodiments of the present invention, alternative commodities selected by a first user are sent to a second user for selection, which provides a socialized shopping solution in an electronic-shopping process.

## Description

### TECHNICAL FIELD

The present invention relates to the computer field, and in particular, to an electronic-shopping method and apparatus.

### BACKGROUND

As the e-commerce market continuously develops, competition becomes increasingly intense. A buyer faces many choices and has difficulty in making a decision. An analysis report points out that average browsing time of an online-shopping user is decreasing, but a conversion rate of each e-commerce company does not increase significantly. Even a leading e-commerce company still has a relatively low conversion rate, where a rate of converting from a product page to a payment confirmation page is only 1%.

At present, a user makes a decision during an electronic-shopping process in a relatively single manner, that is, a purchaser makes a decision all by himself or herself. In a scenario in which a purchaser and a commodity user are not a same person, preference and selection information of the user cannot be conveyed to the purchaser and there is no interaction between the user and the purchaser on purchase information; and therefore, the user makes a commodity purchase decision on a weak basis, and rationality is low, which affects implementation of buying. Even after the purchaser purchases a commodity, there is a relatively high risk that the user makes complaints when subsequently using the commodity. In addition, even though a purchaser and a user is indeed a same person, the purchaser still faces a problem that a purchase decision is hard to determine.

### SUMMARY

Embodiments of the present invention provide an electronic-shopping method and apparatus, so as to provide a socialized shopping solution used when a purchase decision is made in an electronic-shopping process.

According to a first aspect, the method provided in the embodiments of the present invention includes an electronic-shopping method, where the method includes: obtaining information about at least two alternative commodities selected by a first user; sending, through a network, the information about the at least two alternative commodities to user equipment used by a second user, so that the second user performs selection from the at least two alternative commodities, where the second user is different from the first user, and the second user is designated by the first user; obtaining selection information of the second user on the at least two alternative commodities; and determining a to-be-purchased commodity from the at least two alternative commodities according to the selection information.

In a first implementation form of the first aspect, the sending, through a network, the information about the at least two alternative commodities to user equipment used by a second user includes: sending the information about the at least two alternative commodities to user equipment of one second user through the network; and
the determining a to-be-purchased commodity from the at least two alternative commodities according to the selection information includes: selecting a commodity corresponding to the selection information from the at least two alternative commodities.

With reference to the first aspect or the first implementation manner of the first aspect, in a second implementation manner of the first aspect, the method includes: the sending, through a network, the information about the at least two alternative commodities to user equipment used by a second user includes: sending the information about the at least two alternative commodities to user equipments of at least two second users through the network; and the determining a to-be-purchased commodity from the at least two alternative commodities according to the selection information includes: obtaining, according to the selection information, an alternative commodity that is selected most frequently from the at least two alternative commodities, and determining the alternative commodity that is selected most frequently as the to-be-purchased commodity.

With reference to the first aspect or either one of the foregoing implementation manners of the first aspect, in a third implementation manner of the first aspect, the method further includes: acquiring input in which the first user sets an address of a third user as a delivery address of the to-be-purchased commodity, where the third user is different from the first user.

With reference to the first aspect or any one of the foregoing implementation manners of the first aspect, in a fourth implementation manner of the first aspect, the second user is the same as the third user, or the second user is different from the third user; and if the second user is different from the third user, after the determining a to-be-purchased commodity from the at least two alternative commodities according to the selection information, the method further includes: sending the acquired selection information of the second user on the at least two alternative commodities to user equipment used by the third user.

With reference to the first aspect or any one of the foregoing implementation manners of the first aspect, in a fifth implementation manner of the first aspect, before the obtaining at least two alternative commodities selected by a first user, the method further includes: obtaining information about the third user that is entered by the first user; and presenting recommended commodities according to the information about the third user to help the first user select the alternative commodities.

With reference to the first aspect or any one of the foregoing implementation manners of the first aspect, in a sixth implementation manner of the first aspect, the method further includes: obtaining input in which the first user sets an address of the first user as a delivery address of the to-be-purchased commodity.

With reference to the first aspect or any one of the foregoing implementation manners of the first aspect, in a seventh implementation manner of the first aspect, the obtaining information about at least two alternative commodities selected by a first user includes: acquiring, by user equipment used by the first user, the information about the at least two alternative commodities selected by the first user.

With reference to the first aspect or any one of the foregoing implementation manners of the first aspect, in an eighth implementation manner of the first aspect, the obtaining information about at least two alternative commodities selected by a first user includes: receiving, by a server, the information that is about the at least two alternative commodities selected by the first user and that is sent by user equipment used by the first user.

According to a second aspect, an embodiment of the present invention provides an electronic-shopping apparatus, where the apparatus includes: an alternative-commodity information acquisition module, an information sending module, a commodity selection information acquisition module, and a to-be-purchased commodity determining module, where: the alternative-commodity information acquisition module is configured to obtain information about at least two alternative commodities selected by a first user; the information sending module is configured to send, through a network, the information about the at least two alternative commodities to user equipment used by a second user, so that the second user performs selection from the at least two alternative commodities, where the second user is different from the first user and is designated by the first user; the commodity selection information acquisition module is configured to obtain selection information of the second user on the at least two alternative commodities; and the to-be-purchased commodity determining module is configured to determine a to-be-purchased commodity from the at least two alternative commodities according to the selection information.

In a first implementation manner of the second aspect, the information sending module is configured to send the information about the at least two alternative commodities to user equipment of one second user through the network, so that the second user performs selection from the at least two alternative commodities; and the to-be-purchased commodity determining module is configured to select a commodity corresponding to the selection information from the at least two alternative commodities.

With reference to the second aspect or the first implementation manner of the second aspect, in a second implementation manner of the second aspect, the information sending module is configured to send the information about the at least two alternative commodities to user equipments of at least two second users through the network, so that the at least two second users perform selection from the at least two alternative commodities; and the to-be-purchased commodity determining module is configured to: obtain, according to the selection information, an alternative commodity that is selected most frequently from the at least two alternative commodities, and determine the alternative commodity that is selected most frequently as the to-be-purchased commodity.

With reference to the second aspect or either one of the foregoing implementation manners of the second aspect, in a third implementation manner of the second aspect, the apparatus further includes a commodity address acquisition module, where the commodity address acquisition module is configured to acquire input in which the first user sets an address of a third user as a delivery address of the to-be-purchased commodity, where the third user is different from the first user.

With reference to the second aspect or any one of the foregoing implementation manners of the second aspect, in a fourth implementation manner of the second aspect, the second user is the same as the third user, or the second user is different from the third user; and if the second user is different from the third user, the information sending module is further configured to send the acquired selection information of the second user on the at least two alternative commodities to the third user.

With reference to the second aspect or any one of the foregoing implementation manners of the second aspect, in a fifth implementation manner of the second aspect, the apparatus further includes a commodity recommendation module, where the alternative-commodity information acquisition module is further configured to: before acquiring the at least two alternative commodities selected by the first user, obtain information about the third user that is entered by the first user; and the commodity recommendation module is configured to present recommended commodities according to the information about the third user to help the first user select the alternative commodities.

With reference to the second aspect or any one of the foregoing implementation manners of the second aspect, in a sixth implementation manner of the second aspect, the apparatus further includes a commodity address acquisition module, where the delivery address acquisition module is configured to acquire input in which the first user sets an address of the first user as a delivery address of the to-be-purchased commodity.

With reference to the second aspect or any one of the foregoing implementation manners of the second aspect, in a seventh implementation manner of the second aspect, the apparatus is equipment used by the first user.

With reference to the second aspect or any one of the foregoing implementation manners of the second aspect, in an eighth implementation manner of the second aspect, the apparatus is a server, where a commodity information acquisition module included in the server is configured to receive information sent by equipment used by the first user, and the information sent by the equipment used by the first user is the information about the at least two alternative commodities selected by the first user. In the embodiments of the present invention, information about at least two alternative commodities selected by a first user is obtained; the information about the at least two alternative commodities is sent, through a network, to user equipment used by a second user, so that the second user performs selection from the at least two alternative commodities, where the second user is different from the first user; selection information of the second user on the at least two alternative commodities is obtained; and a to-be-purchased commodity is determined from the at least two alternative commodities according to the selection information. In the embodiments of the present invention, alternative commodities selected by a first user are sent to a second user for selection, which provides a socialized shopping solution in an electronic-shopping process, so as to help users transfer information and perform interaction in a shopping process.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of an embodiment of an electronic-shopping method according to the present invention;
FIG. 2 is a structural diagram of an embodiment of an electronic-shopping apparatus according to the present invention; and
FIG. 3 is a structural diagram of an embodiment of an electronic-shopping computer system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

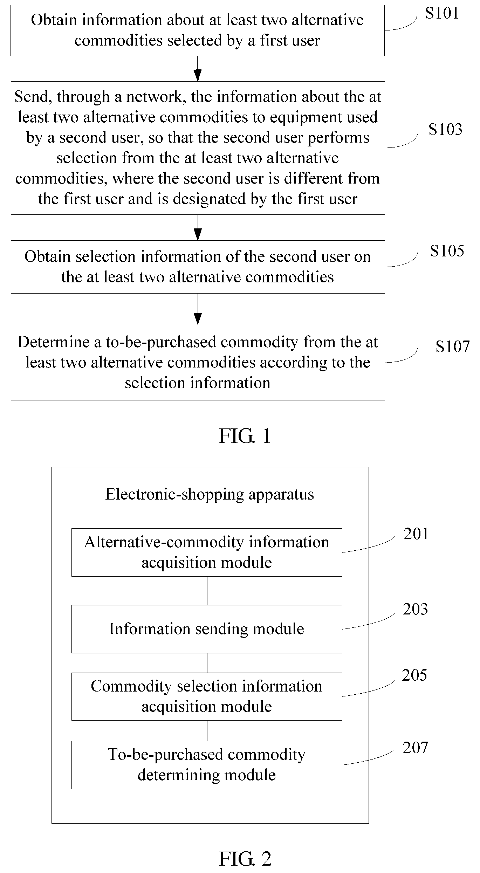

An embodiment of the present invention provides an electronic-shopping method. As shown in FIG. 1, FIG. 1 provides a flowchart of an embodiment of an electronic-shopping method according to the present invention. The method includes: S101. Obtain information about at least two alternative commodities selected by a first user; S103. Send, through a network, the information about the at least two alternative commodities to user equipment used by a second user, so that the second user performs selection from the at least two alternative commodities, where the second user is different from the first user; S105. Obtain selection information of the second user on the at least two alternative commodities; and S107. Determine a to-be-purchased commodity from the at least two alternative commodities according to the selection information.

According to the method provided in this embodiment of the present invention, alternative commodities selected by a first user are sent to a second user for selection, which provides a socialized shopping solution in an electronic-shopping process, so as to help users transfer information and perform interaction in a shopping process.

In an embodiment of the present invention, the sending, through a network, the information about the at least two alternative commodities to user equipment used by a second user includes: sending the information about the at least two alternative commodities to user equipment of one second user through the network; and the determining a to-be-purchased commodity from the at least two alternative commodities according to the selection information includes: selecting a commodity corresponding to the selection information from the at least two alternative commodities.

According to the method provided in this embodiment of the present invention, alternative commodities selected by a first user are sent to one second user for selection, so as to help the first user and the second user transfer information and perform interaction in a shopping process.

In an embodiment of the present invention, the sending, through a network, the information about the at least two alternative commodities to user equipment used by a second user includes: sending the information about the at least two alternative commodities to user equipments of at least two second users through the network; and the determining a to-be-purchased commodity from the at least two alternative commodities according to the selection information includes: obtaining, according to the selection information, an alternative commodity that is selected most frequently from the at least two alternative commodities, and determining the alternative commodity that is selected most frequently as the to-be-purchased commodity.

According to the method provided in this embodiment of the present invention, alternative commodities selected by a first user are sent to multiple second users for selection, so as to help the first user and the multiple second users transfer information and perform interaction in a shopping process.

In an embodiment of the present invention, the method includes: acquiring input in which the first user sets an address of a third user as a delivery address of the to-be-purchased commodity, where the third user is different from the first user. The step of the acquiring input in which the first user sets an address of a third user as a delivery address of the to-be-purchased commodity may be located before, after, or simultaneously with any step of S101, S103, S105, and S107.

According to the method provided in this embodiment of the present invention, alternative commodities selected by a first user are sent to a second user for selection, and an alternative commodity selected by the second user is sent to a third user who is different from the first user, so as to help the first user give a commodity as a gift to the third user by means of electronic shopping; particularly, if the first user is not sure about a preference of the third user, with the help of selection by the second user, the first user can select a commodity that meets the preference of the third user.

In an embodiment of the present invention, the second user is the same as the third user, or the second user is different from the third user; if the second user is different from the third user, after the determining a to-be-purchased commodity from the at least two alternative commodities according to the selection information, the method further includes: sending the acquired selection information of the second user on the at least two alternative commodities to the third user.

According to the method provided in this embodiment of the present invention, the second user is the same as the third user, so as to help the first user give a commodity as a gift to the third user (the second user) by means of electronic shopping; particularly, if the first user is not sure about a preference of the third user, with the help of selection by the third user, the first user can select a commodity that meets the preference of the third user.

According to the method provided in this embodiment of the present invention, the second user is different from the third user, so as to help the first user give a commodity as a gift to the third user by means of electronic shopping; particularly, if the first user is not sure about a preference of the third user, with the help of selection by the second user who is different from the third user, the first user can not only select a commodity that meets the preference of the third user, but also make the given gift a surprise.

In this embodiment of the present invention, after the determining a to-be-purchased commodity from the at least two alternative commodities according to the selection information, the method further includes: sending the acquired selection information of the second user on the at least two alternative commodities to the third user. In most scenarios, the second user selected by the first user is a user who is relatively familiar with the preference of the third user, and sending the selection information of the second user to the third user generates a social process and adds interest to an e-commerce shopping process.

In an embodiment of the present invention, before the acquiring at least two alternative commodities selected by a first user, the method further includes: obtaining information about the third user that is entered by the first user; and presenting recommended commodities according to the information about the third user to help the first user select the alternative commodities. The information about the third user includes a user name identity of the third user, an identity of the third user, and the like. The recommended commodities may be recommended and generated based on historical shopping information, historical browsing information, and the like of the third user.

According to the method provided in this embodiment of the present invention, recommended commodities are presented according to information about a third user, which helps a first user select an alternative commodity as a gift that is to be given to the third user, and provides an intelligent manner of recommending a gift commodity.

In an embodiment of the present invention, the method further includes: acquiring input in which the first user sets an address of the first user as a delivery address of the to-be-purchased commodity. This step may be located before, after, or simultaneously with any step of S101, S103, S105, and S107.

In this embodiment of the present invention, alternative commodities selected by a first user are sent to a second user for selection, and an alternative commodity selected by the second user is sent to the first user, which helps the first user acquire a suggestion of the second user by introducing social interaction with the second user during electronic shopping, and helps the first user select a commodity.

In an embodiment of the present invention, the obtaining information about at least two alternative commodities selected by a first user includes: receiving, by equipment used by the first user, the information about the at least two alternative commodities selected by the first user.

In an embodiment of the present invention, the obtaining information about at least two alternative commodities selected by a first user includes: receiving, by a server, information sent by equipment used by the first user, where the information sent by the equipment used by the first user is the information about the at least two alternative commodities selected by the first user.

An embodiment of the present invention provides an electronic-shopping apparatus. As shown in FIG. 2, FIG. 2 provides a schematic structural diagram of an embodiment of the apparatus according to the present invention. The apparatus includes: an alternative-commodity information acquisition module 201, an information sending module 203, a commodity selection information acquisition module 205, and a to-be-purchased commodity determining module 207, where: the alternative-commodity information acquisition module is configured to obtain information about at least two alternative commodities selected by a first user; the information sending module is configured to send, through a network, the information about the at least two alternative commodities to user equipment used by a second user, so that the second user performs selection from the at least two alternative commodities, where the second user is different from the first user and is designated by the first user; the commodity selection information acquisition module is configured to obtain selection information of the second user on the at least two alternative commodities; and the to-be-purchased commodity determining module is configured to determine a to-be-purchased commodity from the at least two alternative commodities according to the selection information.

In an embodiment of the present invention, the information sending module is configured to send the information about the at least two alternative commodities to user equipment of one second user through the network, so that the second user performs selection from the at least two alternative commodities; and the to-be-purchased commodity determining module is configured to select a commodity corresponding to the selection information from the at least two alternative commodities.

In an embodiment of the present invention, the information sending module is configured to send the information about the at least two alternative commodities to user equipments of at least two second users through the network, so that the at least two second users perform selection from the at least two alternative commodities; and the to-be-purchased commodity determining module is configured to: obtain, according to the selection information, an alternative commodity that is selected most frequently from the at least two alternative commodities, and determine the alternative commodity that is selected most frequently as the to-be-purchased commodity.

In an embodiment of the present invention, the apparatus further includes a commodity address acquisition module 209. The commodity address acquisition module is configured to acquire input in which the first user sets an address of a third user as a delivery address of the to-be-purchased commodity, where the third user is different from the first user.

In an embodiment of the present invention, the second user is the same as the third user, or the second user is different from the third user. If the second user is different from the third user, the information sending module is further configured to send the acquired selection information of the second user on the at least two alternative commodities to the third user.

In an embodiment of the present invention, the apparatus further includes a commodity recommendation module 2011. The alternative-commodity information acquisition module is further configured to: before acquiring the at least two alternative commodities selected by the first user, obtain information about the third user that is entered by the first user. The commodity recommendation module is configured to present recommended commodities according to the information about the third user to help the first user select the alternative commodities.

In an embodiment of the present invention, the apparatus further includes a commodity address acquisition module, where the delivery address acquisition module is configured to acquire input in which the first user sets an address of the first user as a delivery address of the to-be-purchased commodity.

In an embodiment of the present invention, the apparatus is equipment used by the first user.

In an embodiment of the present invention, the apparatus is a server, where a commodity information acquisition module included in the server is configured to receive information sent by equipment used by the first user, and the information sent by the equipment used by the first user is the information about the at least two alternative commodities selected by the first user.

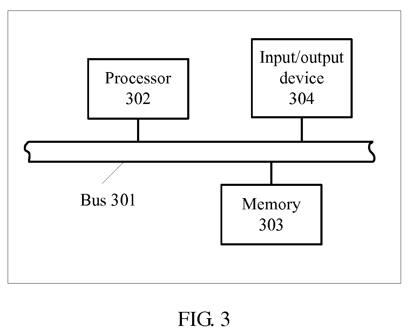

An embodiment of the present invention provides an electronic-shopping computer system. As shown in FIG. 3, FIG. 3 provides a structural diagram of the computer system according to an embodiment of the present invention. The computer system includes a bus 301, a processor 302, a memory 303, and an input/output device 304. The processor 302, the memory 303, and the input/output device 304 are connected by using the bus 301. The memory is configured to store data and code. The processor is coupled to the memory, and invokes the data and the code in the memory to implement the following method: obtaining information about at least two alternative commodities selected by a first user; sending, through a network, the information about the at least two alternative commodities to user equipment used by a second user, so that the second user performs selection from the at least two alternative commodities, where the second user is different from the first user and is designated by the first user; obtaining selection information of the second user on the at least two alternative commodities; and determining a to-be-purchased commodity from the at least two alternative commodities according to the selection information.

In an embodiment of the present invention, the input/output device 704 includes a text input device such as a keyboard, a touchscreen, and a mouse; a camera; a tactile function module; and the like. The memory is coupled to the processor, and is configured to control the input/output device to obtain the information about the at least two alternative commodities selected by the first user.

A person skilled in the art may understand that the accompanying drawings are merely schematic diagrams of exemplary embodiments, and modules or processes in the accompanying drawings are not necessarily required for implementing the present invention.

A person skilled in the art may understand that the modules in the apparatuses provided in the embodiments may be arranged in the apparatuses in a distributed manner according to the description of the embodiments, or may be arranged in one or more apparatuses that are different from those described in the embodiments. The modules in the foregoing embodiments may be combined into one module, or split into a plurality of submodules.

A person of ordinary skill in the art may understand that all or some of the steps of the methods in the embodiments may be implemented by a program instructing related hardware. The program may be stored in a computer readable storage medium, such as a ROM/RAM, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An electronic-shopping method, wherein the method comprises: obtaining information about at least two alternative commodities selected by a first user; sending, through a network, the information about the at least two alternative commodities to user equipment used by a second user, so that the second user performs selection from the at least two alternative commodities, wherein the second user is different from the first user, and the second user is designated by the first user; obtaining selection information of the second user on the at least two alternative commodities; and determining a to-be-purchased commodity from the at least two alternative commodities according to the selection information.

2. The method according to claim 1, wherein the sending, through a network, the information about the at least two alternative commodities to user equipment used by a second user comprises: sending the information about the at least two alternative commodities to user equipment of one second user through the network; and
the determining a to-be-purchased commodity from the at least two alternative commodities according to the selection information comprises: selecting a commodity corresponding to the selection information from the at least two alternative commodities.

3. The method according to claim 1, wherein the method comprises: the sending, through a network, the information about the at least two alternative commodities to user equipment used by a second user comprises: sending the information about the at least two alternative commodities to user equipments of at least two second users through the network; and the determining a to-be-purchased commodity from the at least two alternative commodities according to the selection information comprises: obtaining, according to the selection information, an alternative commodity that is selected most frequently from the at least two alternative commodities, and determining the alternative commodity that is selected most frequently as the to-be-purchased commodity.

4. The method according to any one of claims 1 to 3, wherein the method further comprises: acquiring input in which the first user sets an address of a third user as a delivery address of the to-be-purchased commodity, wherein the third user is different from the first user.

5. The method according to claim 4, wherein the second user is the same as the third user, or the second user is different from the third user; and if the second user is different from the third user, after the determining a to-be-purchased commodity from the at least two alternative commodities according to the selection information, the method further comprises: sending the acquired selection information of the second user on the at least two alternative commodities to user equipment used by the third user.

6. The method according to claim 4 or 5, wherein before the obtaining at least two alternative commodities selected by a first user, the method further comprises: obtaining information about the third user that is entered by the first user; and presenting recommended commodities according to the information about the third user to help the first user select the alternative commodities.

7. The method according to any one of claims 1 to 3, wherein the method further comprises: obtaining input in which the first user sets an address of the first user as a delivery address of the to-be-purchased commodity.

8. The method according to any one of claims 1 to 6, wherein the obtaining information about at least two alternative commodities selected by a first user comprises: acquiring, by user equipment used by the first user, the information about the at least two alternative commodities selected by the first user.

9. The method according to any one of claims 1 to 6, wherein the obtaining information about at least two alternative commodities selected by a first user comprises: receiving, by a server, the information that is about the at least two alternative commodities selected by the first user and that is sent by user equipment used by the first user.

10. An electronic-shopping apparatus, wherein the apparatus comprises: an alternative-commodity information acquisition module, an information sending module, a commodity selection information acquisition module, and a to-be-purchased commodity determining module, wherein: the alternative-commodity information acquisition module is configured to obtain information about at least two alternative commodities selected by a first user; the information sending module is configured to send, through a network, the information about the at least two alternative commodities to user equipment used by a second user, so that the second user performs selection from the at least two alternative commodities, wherein the second user is different from the first user and is designated by the first user; the commodity selection information acquisition module is configured to obtain selection information of the second user on the at least two alternative commodities; and the to-be-purchased commodity determining module is configured to determine a to-be-purchased commodity from the at least two alternative commodities according to the selection information.

11. The apparatus according to claim 10, wherein the information sending module is configured to send the information about the at least two alternative commodities to user equipment of one second user through the network, so that the second user performs selection from the at least two alternative commodities; and the to-be-purchased commodity determining module is configured to select a commodity corresponding to the selection information from the at least two alternative commodities.

12. The apparatus according to claim 10, wherein the information sending module is configured to send the information about the at least two alternative commodities to user equipments of at least two second users through the network, so that the at least two second users perform selection from the at least two alternative commodities; and the to-be-purchased commodity determining module is configured to: obtain, according to the selection information, an alternative commodity that is selected most frequently from the at least two alternative commodities, and determine the alternative commodity that is selected most frequently as the to-be-purchased commodity.

13. The apparatus according to any one of claims 1 to 3, wherein the apparatus further comprises a commodity address acquisition module, wherein the commodity address acquisition module is configured to acquire input in which the first user sets an address of a third user as a delivery address of the to-be-purchased commodity, wherein the third user is different from the first user.

14. The apparatus according to claim 4, wherein the second user is the same as the third user, or the second user is different from the third user; and if the second user is different from the third user, the information sending module is further configured to send the acquired selection information of the second user on the at least two alternative commodities to the third user.

15. The apparatus according to claim 4 or 5, wherein the apparatus further comprises a commodity recommendation module, wherein the alternative-commodity information acquisition module is further configured to: before acquiring the at least two alternative commodities selected by the first user, obtain information about the third user that is entered by the first user; and the commodity recommendation module is configured to present recommended commodities according to the information about the third user to help the first user select the alternative commodities.

16. The apparatus according to any one of claims 1 to 3, wherein the apparatus further comprises a commodity address acquisition module, wherein the delivery address acquisition module is configured to acquire input in which the first user sets an address of the first user as a delivery address of the to-be-purchased commodity.

17. The apparatus according to any one of claims 1 to 6, wherein the apparatus is equipment used by the first user.

18. The apparatus according to any one of claims 1 to 6, wherein the apparatus is a server, wherein a commodity information acquisition module comprised in the server is configured to receive information sent by equipment used by the first user, and the information sent by the equipment used by the first user is the information about the at least two alternative commodities selected by the first user.
